# EUROPEAN PATENT APPLICATION

(11) **EP 3 184 396 A1**
(43) Date of publication of application: **28.06.2017**
(21) Application number: 15847399.1
(22) Date of filing: 08.09.2015
(51) Int. Cl.: B61D 37/00, A47C 16/00, B60N 2/64, B61D 1/04

(54) **BACKREST, VEHICLE, AND GUIDE TRACK TRANSPORTATION SYSTEM**

(30) Priority: 30.09.2014 JP 2014199645
(71) Applicant: Mitsubishi Heavy Industries, Ltd., Tokyo 108-8215 (JP)
(72) Inventor: FUJIO Nobuyuki, Tokyo 108-8215 (JP); JOREN Ichiro, Tokyo 108-8215 (JP); KARASAWA Ryuji, Hiroshima-shi Hiroshima 730-0051 (JP)
(74) Representative: Henkel, Breuer & Partner
(86) International application number: PCT/JP2015/075421
(87) International publication number: WO 2016/052094

(57) **Abstract**

A backrest (200) includes a panel-shaped base member 10 that is provided along a main surface (12) which includes a reference line (13) extending in a direction intersecting a floor surface (F) of a vehicle, and a retaining member (11) that is provided on a front surface (14A) of the base member (10) and that has a front surface (14B) which has a curved surface shape in a state in which the retaining member (11) is supporting a load in a direction toward the main surface (12). Due to this configuration, the retaining member (11) presents a curved surface shape due to the load of a standing passenger when the passenger leans against the backrest (200), and thereby the passenger's body can be stably retained.

## Description

### Technical Field

The present invention relates to a backrest, a vehicle, and a guide track transportation system.

Priority is claimed on Japanese Patent Application No. 2014-199645, filed on September 30, 2014, the content of which is incorporated herein by reference.

### Background Art

Generally, in a vehicle that travels on a railway, a guide track, or the like, a configuration in which seats are provided to transport passengers in a sitting posture is employed. With this configuration, it is possible to provide seats with respect to a predetermined number of passengers. On the other hand, there are many passengers who do not sit on seats and are in a standing posture on crowded occasions. Since the vehicle shakes or vibrates, passengers in the standing posture generally try to secure a stable posture by grasping on a structure inside the vehicle, such as a strap or a handrail, or by leaning on a wall surface or the like at hand.

Providing not only a space but also a better ride for passengers in such a standing posture may be one of means for enhancing service for passengers for transport providers.

As an approach for solving the above-mentioned problem, for example, techniques disclosed in PTL 1 and PTL 2 are known. PTL 1 discloses a variable seat that includes a seat portion provided on an inside wall of a vehicle, a movable arm that supports the seat portion, and an expanded seat portion supported on the seat portion. The variable seat may be configured to change its form according to the degree of congestion in the vehicle or physiques of users.

PTL 2 discloses a sleeve partition plate for railway car seats, having unevenness on an outer shell. The sleeve partition plate is formed by bringing an outer shell made of plastics in which a concave portion is formed on a front surface thereof face to face with a plastic outer shell in which a convex portion is formed on a front surface thereof. The concave portion is disposed on a sitting side, and thus, do not interfere with the elbow of a passenger in a sitting posture. The convex portion supports a part of load when a standing passenger leans, and thus, it is possible to reduce fatigue of the passenger.

### Citation List

### Patent Literature

[PTL1] Japanese Unexamined Patent Application, First Publication No. 2004-147768
[PTL 2] Japanese Unexamined Utility Model Application, First Publication No. H6-36447

### Summary of Invention

### Technical Problem

However, in the apparatus disclosed in PTL 1, since the expanded seat portion is disposed at an almost right angle with respect to a seat portion, ride comfort of a passenger is limited. In addition, in order to pull out and use the seat portion, a corresponding space is necessary, which may give a feeling of oppression to other passengers on crowded occasions.

Further, since a passenger performs an operation of pulling out the seat portion in use, it is necessary that the passenger knows how to use the seat in advance. In addition, it is necessary to consider keeping aesthetics inside the vehicle. Thus, there is room for further improvement.

The sleeve partition disclosed in PTL 2 is formed of plastics, and thus has limitation to following up the shape of the passenger's body.

The present invention provides a backrest having habitability and aesthetics, and a vehicle and a guide track transportation system including the backrest. Solution to Problem

According to a first aspect of the present invention, a backrest includes: a base member that is provided along a main surface including a reference line that extends in a direction that intersects a floor surface of a vehicle; and a retaining member that is provided on a front surface of the base member and has a front surface of a curved shape in a state of supporting the load in a direction toward the front surface. The backrest is used for supporting load of a standing passenger.

According to this configuration, when a passenger leans on the backrest, the retaining member is formed into a curved shape in a state of supporting load of the passenger, and thus, it is possible to stably retain the body. Further, in use, it is not necessary for the passenger to perform a specific operation, and it is not necessary to prepare a new space.

According to a second aspect of the present invention, in the backrest according to the first aspect, the front surface of the retaining member may be formed in a concave shape having a first curved surface and a second curved surface that extend in different directions with the reference line being interposed therebetween, when seen in an extending direction of the reference line.

According to this configuration, it is possible to stably retain the body of a passenger who uses the backrest using the first curved surface and the second curved surface from the left and right.

According to a third aspect of the present invention, in the backrest according to the first or second aspect, the front surface of the retaining member may be formed in a convex shape that protrudes in a direction away from the main surface, when seen in a direction that intersects the reference line.

According to this configuration, it is possible to follow up the shape of the passenger's body by forming the front surface of the retaining member in the convex shape. Thus, it is possible to stably retain the passenger's body.

According to a fourth aspect of the present invention, in the backrest according to any one of the first to third aspects, the retaining member may include a concave portion that is recessed in a direction approaching the front surface of the base member, when seen in the direction that intersects the reference line.

According to this configuration, the concave portion formed in the retaining member follow ups the shape of the passenger's body, to thereby make it possible to stably retain the passenger's body.

According to a fifth aspect of the present invention, in the backrest according to the fourth aspect, the retaining member may include a convex portion that protrudes in the direction away from the front surface of the base member, when seen in the direction that intersects the reference line.

According to this configuration, as the convex portion is provided, it is possible to further enhance follow-up with respect to the shape of the passenger's body. Thus, it is possible to more stably retain the passenger's body.

According to a sixth aspect of the present invention, in the backrest according to the fourth or fifth aspect, the retaining member may further include a partitioning portion that extends along the reference line in an area which is close to the floor surface with respect to the concave portion and protrudes in the direction away from the front surface of the base member.

According to this configuration, when a passenger leans on the backrest, it is possible to interpose the partitioning portion between both legs. Thus, it is possible to more stably retain the body of a passenger that uses the backrest in a lateral direction.

According to a seventh aspect of the present invention, in the backrest according to any one of the first to sixth aspects, the retaining member may be formed of a material that enables the front surface thereof to maintain the curved shape in a state where the load is removed.

According to this configuration, even in a state where the backrest is not used, the curved shape is maintained, and thus, it is possible to enhance visibility as the backrest. That is, it is possible to enhance appealing features for encouraging a passenger to use the backrest.

According to an eighth aspect of the present invention, in the backrest according to any one of the first to sixth aspects, the retaining member may be configured of a material having an elastic restoring force and may restore an initial shape different from the curved shape in a state where the load is removed.

According to this configuration, in a situation where a passenger does not use the backrest, the retaining member restores the initial shape by the elastic restoring force. Thus, it is possible to enhance aesthetics as the backrest.

According to a ninth aspect of the present invention, in the backrest according to any one of the first to eighth aspects, the retaining member may be formed of a stretchable fiber-based material.

According to this configuration, since the retaining member is stretchable, it is possible to follow up the shape of the passenger's body. In addition, it is possible to further enhance use comfort of the backrest due to air permeability of the fiber-based material.

According to a tenth aspect of the present invention, in a vehicle, the base member according to any one of the first to ninth aspects may be integrally or separately provided on a wall surface in the vehicle that extends along the main surface.

According to this configuration, it is possible to efficiently and proactively utilize wall surfaces in the vehicle as spaces where passengers are accommodated.

According to an eleventh aspect of the present invention, in the vehicle according to the tenth aspect, the wall surface may include a first wall surface and a second wall surface that form a corner by intersecting each other.

According to this configuration, it is possible to efficiently and proactively utilize corners formed on wall surfaces in the vehicle as spaces where passengers are accommodated.

According to a twelfth aspect of the present invention, in the vehicle according to the eleventh aspect, the first wall surface may be a sleeve partition of the vehicle, and the second wall surface may be a side inner wall surface of the vehicle.

According to this configuration, it is possible to efficiently and proactively utilize a space formed by the sleeve partition of the vehicle and the side inner wall surface as a space where a passenger is accommodated.

According to the thirteenth aspect of the present invention, in the vehicle according to the eleventh aspect, the first wall surface may be an end panel inner wall surface of the vehicle, and the second wall surface may be the side inner wall surface of the vehicle.

According to this configuration, it is possible to efficiently and proactively utilize a space formed by the end panel inner wall surface of the vehicle and the side inner wall surface as a space where a passenger is accommodated.

According to a fourteenth aspect of the present invention, in the vehicle according to the eleventh aspect, the first wall surface may be a partition wall surface with respect to a driver's cab of the vehicle, and the second wall surface may be the side inner wall surface of the vehicle.

According to this configuration, it is possible to efficiently and proactively utilize a space formed by the partition wall surface with respect to the driver's cab of the vehicle and the side inner wall surface as a space where a passenger is accommodated.

According to a fifteenth aspect of the present invention, in the vehicle according to the eleventh aspect, the first wall surface may be a wall surface of a device box provided in the vehicle, and the second wall surface may be the side inner wall surface of the vehicle.

According to this configuration, it is possible to efficiently and proactively utilize the periphery of the device box provided in the vehicle as a space where passengers are accommodated.

According to a sixteenth aspect of the present invention, in the vehicle according to the tenth aspect, the wall surface may be an inner wall surface of a multipurpose space provided in the vehicle.

According to this configuration, it is possible to efficiently and proactively utilize a place where a seat cannot be provided, such as a multipurpose space in the vehicle, as a space where passengers are accommodated.

According to a seventeenth aspect of the present invention, there is provided a guide track transportation system including: the vehicle according to any one of the tenth to sixteenth aspects; and a guide track on which the vehicle travels.

According to this configuration, it is possible to provide a guide track transportation system in which habitability and aesthetics inside a vehicle are enhanced. Advantageous Effects of Invention

According to the above-described backrest, vehicle and guide track transportation system, it is possible to enhance habitability of passengers and aesthetics inside a vehicle.

### Brief Description of Drawings

FIG. 1 is a cross-sectional view showing an overview of a guide track transportation system according to the present invention, seen in a traveling direction of a vehicle.
FIG. 2 is an internal plan view of a vehicle according to the present invention.
FIG. 3 is a diagram showing a backrest (backrest for a flat part) according to a first embodiment of the present invention, seen in an extending direction of a reference line.
FIG. 4 is a front view of the backrest (backrest for the flat part) according to the first embodiment of the present invention.
FIG. 5A is a diagram showing a state before the backrest (backrest for the flat part) according to the first embodiment of the present invention is used.
FIG. 5B is a diagram showing a state where the backrest (backrest for the flat part) according to the first embodiment of the present invention is being used.
FIG. 6A is a diagram showing a modified example of the backrest (backrest for the flat part) according to the first embodiment of the present invention, which is a diagram showing a state before the backrest is used.
FIG. 6B is a diagram showing a modified example of the backrest (backrest for the flat part) according to the first embodiment of the present invention, which is a diagram showing a state where the backrest is being used.
FIG. 7A is a diagram showing a modified example of the backrest (backrest for the flat part) according to the first embodiment of the present invention, which is a diagram showing a state before the backrest is used.
FIG. 7B is a diagram showing a modified example of the backrest (backrest for the flat part) according to the first embodiment of the present invention, which is a diagram showing a state where the backrest is being used.
FIG. 8 is a diagram showing a backrest (backrest for a corner part) according to the first embodiment of the present invention, seen in an extending direction of a reference line.
FIG. 9 is a front view of the backrest (backrest for the corner part) according to the first embodiment of the present invention.
FIG. 10 is a diagram showing an installation example of the backrest (backrest for the corner part) according to the first embodiment of the present invention.
FIG. 11 is a front view of a backrest according to a second embodiment of the present invention.
FIG. 12 is a diagram showing the backrest according to the second embodiment of the present invention, seen in an extending direction of a reference line.
FIG. 13 is a diagram showing a state where the backrest according to the second embodiment of the present invention is being used.
FIG. 14 is a diagram showing a backrest according to a third embodiment of the present invention.
FIG. 15 is a diagram showing a modified example of the backrest according to the third embodiment of the present invention.
FIG. 16 is a diagram showing a backrest according to a fourth embodiment of the present invention.
FIG. 17 is a diagram showing a backrest according to a fifth embodiment of the present invention.

### Description of Embodiments

### (First embodiment)

Hereinafter, a first embodiment of the present invention will be described with reference to the accompanying drawings.

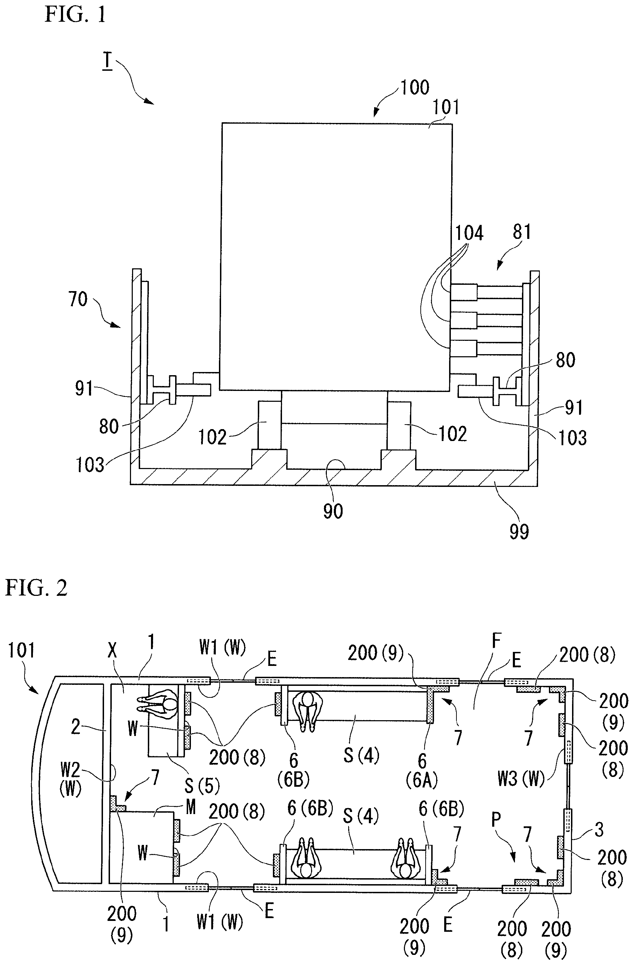

As shown in FIG. 1, a guide track transportation system T according to this embodiment includes a vehicle 100 that transports passengers, and a guide track 70 on which the vehicle 100 travels.

The guide track 70 includes a guide track road surface 90 which is approximately horizontally provided, side walls 91 that extend approximately upward from both ends of the guide track road surface 90 in a width direction, guide rails 80 that are provided on the side walls 91, and power supply cables 81 that are provided integrally with the guide rail 80.

The guide rails 80 are provided on inner sides of the side walls 91 (on sides of the guide track road surface 90). The guide rails 80 are members that extend over the entire road length of the guide track 70. The plurality of power supply cables 81 are provided on one of the side walls 91 at intervals in a vertical direction. The power supply cables 81 are provided over the entire road length of the guide track 70, similar to the guide rail 80.

The vehicle 100 includes a box-shaped vehicle body 101, traveling wheels 102 that are provided under the vehicle body 101, guide wheels 103 that are provided in both side surface portions of the vehicle body 101, and power collectors 104 that are provided in parallel with each other in the vertical direction with respect to the guide wheels 103.

The guide wheels 103 are supported to be rotatable around vertical rotation shafts in the both side surface portions of the vehicle 100. The guide wheels 103 are provided at approximately the same height position as that of the guide rails 80. Accordingly, when the vehicle 100 travels, the guide wheels 103 rotate being in contact with the guide rails 80.

The power collectors 104 are in sliding contact with the above-mentioned power supply cables 81. As the power collectors 104 and the power supply cables 81 are in sliding contact with each other, power supplied from the power supply cables 81 is collected by the power collectors 104. Thus, the vehicle 100 can travel on the guide track 70 (which will be described later). In FIG. 1, an example of 3-phase AC in which three power supply cables 81 are provided is shown. However, a case where DC (of two phases) is used as power, two power supply cables 81 are provided.

Further, the vehicle 100 is not limited to use in the above-described guide track transportation system T, but may be applied to any transport machine such as a railway or a bus.

As shown in FIG. 2, inside the vehicle body 101, a pair of side wall surfaces 1 that are provided vertically on a floor surface F, a front wall surface 2 and a rear wall surface 3 that form a front portion and a rear portion of the vehicle 100 which are provided vertically on the floor surface F, seats S that are disposed in an internal space X formed by the pair of side wall surfaces 1, the front wall surface 2, and the rear wall surface 3, a device box M that accommodates devices or the like used in an operation of the vehicle 100, and a plurality of backrests 200 that are disposed on inner wall surfaces W of the vehicle 100 are provided.

The pair of side wall surfaces 1 includes at least one entrance E which is a doorway through which passengers get on and off, and a side window (not shown) provided in parallel to the entrance E. As the entrance E, for example, a single sliding door, double sliding doors, or the like are applied. A plurality of side windows are normally provided to capture external light into the internal space X of the vehicle 100. In addition, in each side wall surface 1, a surface disposed on the side of the internal space X of the vehicle 100 is provided with a decorative panel, or the like, and is formed in a side inner wall surface W1.

The front wall surface 2 and the rear wall surface 3 refer to end panels of the vehicle 100, and include a wall surface on a side where a driver's cab is disposed in the case of a lead vehicle. Gangway connections may be provided in the end panels, as necessary. Further, in the front wall surface 2 and the rear wall surface 3, surfaces disposed on the side of the internal space X of the vehicle 100 are provided with decorative panels or the like, and form a front inner wall surface W2 (partition wall surface W2 with respect to a driver's cab) and an end panel inner wall surface W3. In the following description, the side inner wall surfaces W1, the front inner wall surface W2, and the end panel inner wall surface W3 may be simply referred to as an inner wall surface W.

In the internal space X formed by the above-mentioned inner wall surface W, the seats S on which passengers sit are provided. In the vehicle 100 according to this embodiment, the seats S include long seats 4 of which seating surfaces are disposed along the side inner wall surfaces W1, and a cross seat 5 of which a seat surface is disposed in a direction intersecting the side inner wall surfaces W1.

The long seats 4 are seats which are disposed along the side inner wall surfaces W1 of the vehicle 100, in which seat surfaces are continuous seats. In this embodiment, each long seat 4 is provided in an area between the pair of entrances E on the side inner wall surface W1. In end portions of each long seat 4, a sleeve partition 6 is provided along a flat surface that intersects the traveling direction of the vehicle 100. The sleeve partition 6 is a decorative panel or the like that is provided vertically above the floor surface F, and a handrail or the like to be grasped by passengers is provided in an upper portion thereof as necessary. The sleeve partition 6 and the side inner wall surface W1 are disposed so as to intersect each other at an approximately right angle. The example of FIG. 2 and the above description show an example of a configuration of the vehicle 100 (vehicle body 101), and the invention is not limited thereto.

In the internal space X of the vehicle body 101 configured as described above, passengers sit on the seats S as necessary. On the other hand, there are passengers standing who do not sit on the seats S on crowded occasions. In the vehicle 100 according to this embodiment, for use of such standing passengers, the backrests 200 are provided at a plurality of places. The backrests 200 are provided at several places of wall surfaces in the internal space X of the vehicle 100 in order to effectively and proactively use spaces having such sizes that it is difficult to dispose the seats S but it is possible to accommodate a standing passenger. As such a place, for example, a corner 7 formed by the above-mentioned sleeve partition 6 and the side inner wall surface W1, a corner 7 formed by the end panel inner wall surface W3 and the side inner wall surface W1, a rear surface (inner wall surface W) of the cross seat 5, a wall surface (inner wall surface W) of the device box M or the like, may be used.

In disposition of the backrests 200 at the corners 7, there are two forms. That is, one is a form in which an a part (a base member 10 which will be described later) of the backrest 200 also serves as the sleeve partition 6 to form a new sleeve partition 6A, and the other is a form in which the backrest 200 is disposed on a sleeve partition 6B which is already provided.

In order to correspond to the plurality of places described above, the backrests 200 according to this embodiment have two types, that is, a backrest 9 for a corner part and a backrest 8 for a flat part. The backrest 9 for the corner part is provided at the corner 7, and the backrest 8 for the flat part is provided on a flat portion of the inner wall surface W.

### (Backrest for the flat portion)

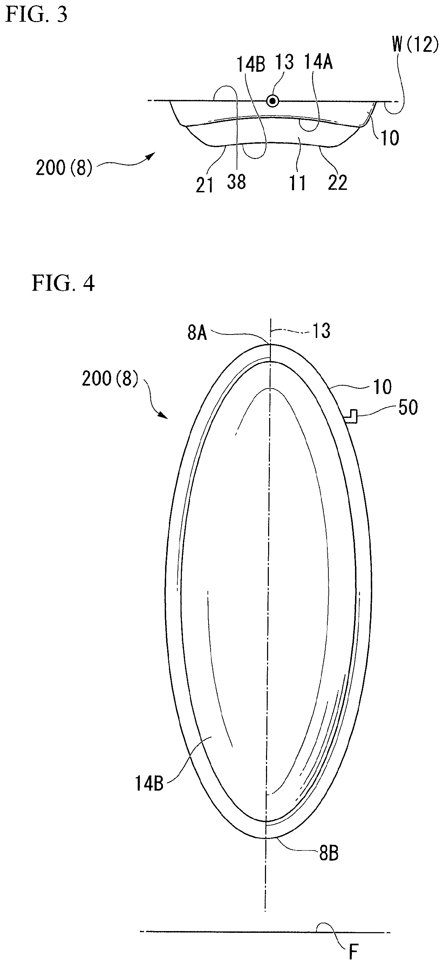

A configuration of the backrest 8 for the flat part provided along a flat wall surface will be described with reference to FIGS. 3 to 5B. As shown in FIG. 3, the backrest 8 for the flat part includes the base member 10 fixed to the inner wall surface W, and a retaining member 11 provided on a front surface 14A of the base member 10.

The base member 10 is a member formed to be bent in an approximately circular arc shape in a sectional view. More specifically, as shown in FIG. 3, the front surface of the base member 10 opposite to the inner wall surface W has a concave shape in which the entirety thereof is smoothly recessed toward a main surface 12 when seen in an extending direction of a reference line 13.

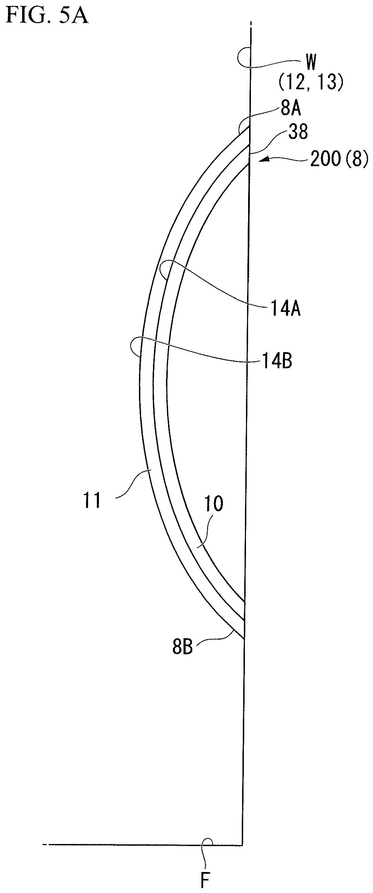

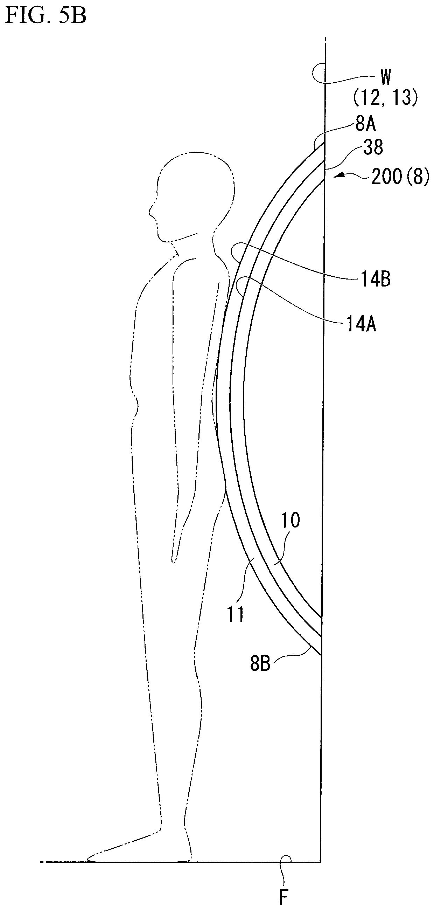

Further, as shown in FIGS. 5A and 5B, the base member 10 is formed so that it is bent to be convex from the inner wall surface W in a direction from an upper side to a lower side along the direction of the reference line 13, in a cross-sectional view intersecting the reference line 13. Both edges of the base member 10 in a vertical direction are formed in a shape corresponding to the inner wall surface W of the vehicle body 101 to form an attachment portion 38. In a state where the attachment portion 38 is in contact with the inner wall surface W, the base member 10 is attached to the inner wall surface W.

Here, the inner wall surface W extends approximately along the main surface 12 including the reference line 13 that extends in the direction intersecting the floor surface F. Accordingly, the base member 10 is provided in a state of being along the main surface 12.

Further, the retaining member 11 is provided on the front surface 14A placed on a side opposite to the attachment portion 38 in the base member 10. The thickness of the retaining member 11 is approximately uniform along the front surface 14A of the base member 10. In addition, the retaining member 11 is formed of a material capable of being elastically deformed, to thereby serve as a cushion to ease a hard feeling when passengers lean thereon. As such a material, for example, urethane foam or a foamable resin material such as sponge may be considered.

A front surface 14B of the retaining member 11 has a curved shape along the front surface 14A of the base member 10. Specifically, the front surface 14B of the retaining member 11 is formed in a concave shape in which the entirety thereof is smoothly recessed toward the main surface 12 when seen in the extending direction of the reference line 13, and is formed in a shape that protrudes while being bent in a direction away from the main surface 12 when seen in the direction intersecting the reference line 13. More specifically, when seen in the extending direction of the reference line 13, the front surface 14B of the retaining member 11 is formed by a first curved surface 21 and a second curved surface 22 that extend in different directions with the above-mentioned reference line 13 being interposed therebetween. The first curved surface 21 and the second curved surface 22 are curved surfaces formed to be bent toward the attachment portion 38 (main surface 12) when seen in the extending direction of the reference line 13. The first curved surface 21 and the second curved surface 22 are continuously formed to form a single curved shape. Thus, the front surface 14B of the retaining member 11 is formed in a concave shape in which the entirety thereof is smoothly recessed toward the main surface 12.

Further, as shown in FIG. 4, a hook 50 from which a passenger hangs baggage, or the like, may be provided on the backrest 200. The hook 50 is provided on an outer surface of the base member 10. On the outer surface of the base member 10, a hook storage (not shown) provided to be recessed inward is formed. The hook 50 in an unused state is configured to be stored in the hook storage. More specifically, the hook 50 is supported by a pin or the like provided in the hook storage. Thus, the hook 50 is rotatable around the pin. When using the hook 50, a passenger rotates and pulls out the hook 50. In addition, it is preferable that the hook 50 in the storage state is formed to be flushed with the outer surface of the base member 10. It may be not essential that the hook 50 is stored in the base member 10.

According to such a configuration, since baggage or the like can be hung from the hook 50, it is possible to further reduce the burden of standing passengers. That is, it is possible to further enhance habitability of the vehicle 100.

With respect to the backrest 8 for the flat part formed as described above, a passenger leans back while retaining the passenger's back thereon (see FIG. 5B). Thus, it is possible to stably support load of a standing passenger. Particularly, since the retaining member 11 is formed of an elastic material, it is possible to give excellent ride comfort to a passenger, compared with a case where the passenger directly leans on a hard wall surface.

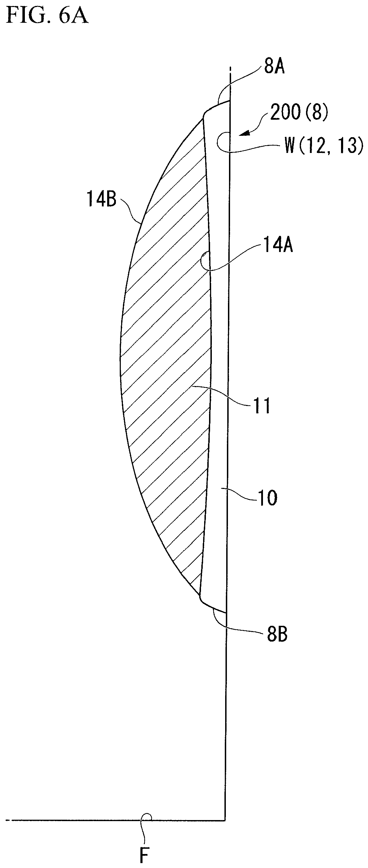

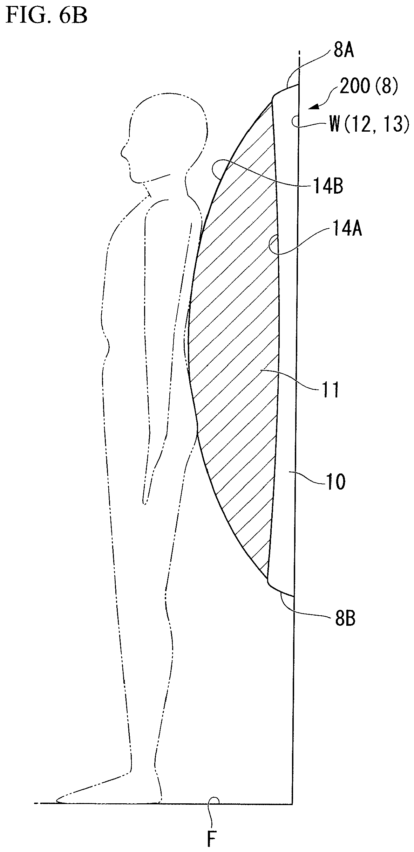

Here, as shown in FIGS. 6A and 6B, in a cross-sectional view seen in the direction intersecting the reference line 13, the retaining member 11 may be formed to be greater than the thickness of the base member 10, and the front surface 14B of the retaining member 11 may be formed to have a curved shape which is convex shape from the front surface 14A of the base member 10. Here, the front surface 14A of the base member 10 may be formed to be recessed toward the inner wall surface W as shown in FIGS. 6A and 6B, but the invention is not limited thereto. That is, the front surface 14A may be formed to be convex toward the inner wall surface W, or may be formed in a flat shape which is parallel to the inner wall surface W.

In a case where a passenger leans on the retaining member 11, the retaining member 11 is slightly deformed as shown in FIG. 6B. Specifically, the retaining member 11 is deformed so that unevenness that follows up the shape of the passenger's body is formed on the front surface 14B. In this way, since the retaining member 11 is formed of a material capable of being elastically deformed, the retaining member 11 serves as a cushion that eases a hard feeling when the passenger leans. As such a material, for example, urethane foam or a foamable resin material such as sponge may be considered.

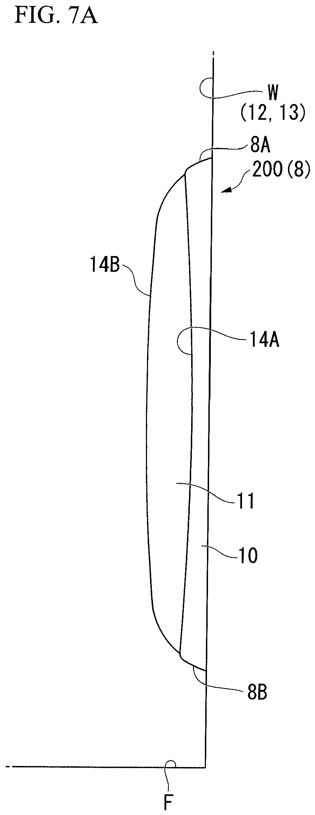

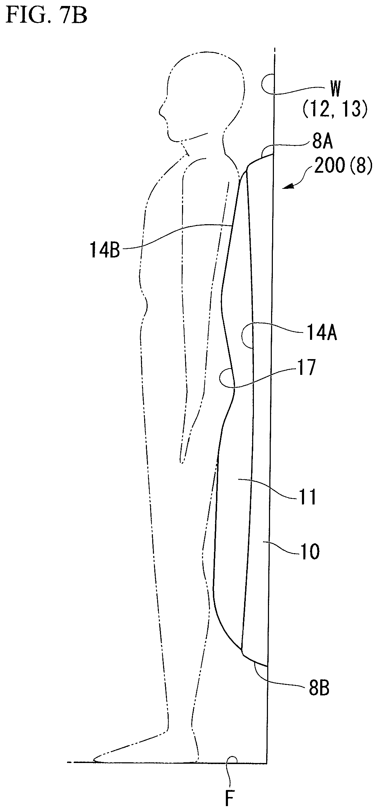

The retaining member 11 may be configured to be greatly elastically deformed to wrap the passenger's body. In this case, as shown in FIGS. 7A and 7B, the front surface 14A of the retaining member 11 may be formed in a flat shape which is parallel to the inner wall surface W. In a case where a passenger leans on the retaining member 11, the retaining member 11 greatly deforms along a surface shape of the passenger's body as shown in FIG. 7B.

According to such a configuration, in a state where a passenger does not use the backrest 200, that is, in a state where load is removed from the retaining member 11, the front surface 14B of the retaining member 11 forms a shape (initial shape) along the front surface 14A of the base member 10 by an elastic restoring force thereof. Accordingly, in a situation where a passenger does not use the backrest 200, since the retaining member 11 restores the initial shape by the elastic restoring force, it is possible to enhance aesthetics of the backrest 200.

On the other hand, in a state where a passenger uses the backrest 200, that is, in a state where load is added to the retaining member 11, the retaining member 11 is greatly deformed to wrap the passenger's body, to thereby make it possible to offer a retaining feeling to the passenger. Further, according to such a configuration, the retaining member 11 may exhibit various curved shapes according to physiques of passengers.

### (Backrest for corner part)

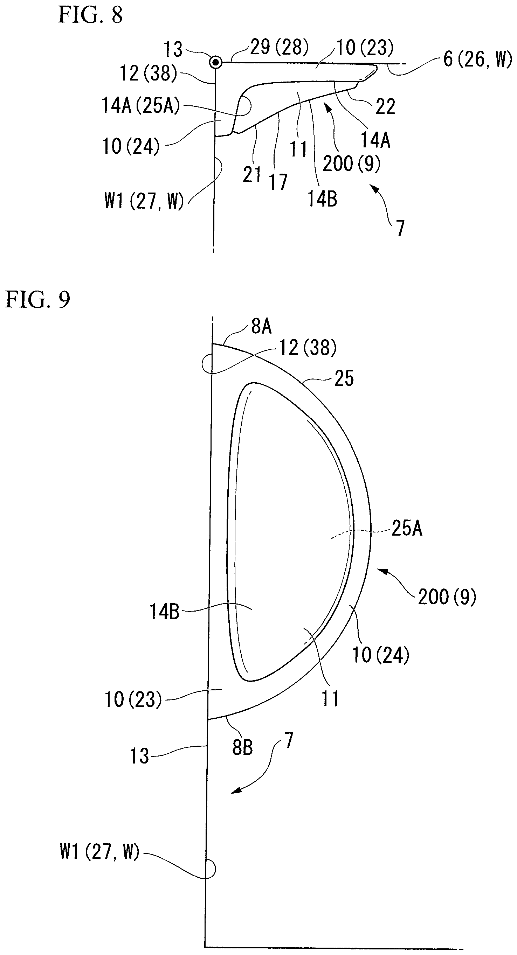

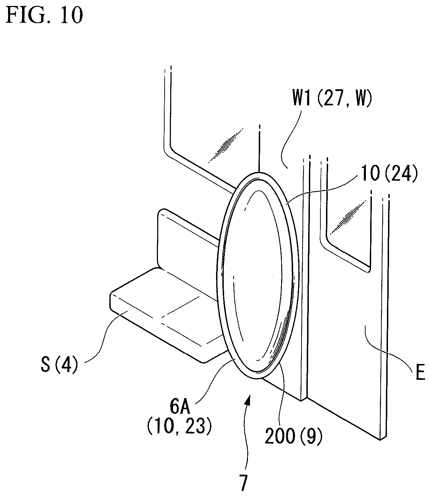

Subsequently, a configuration of the backrest 9 for the corner part will be described with reference to FIGS. 8 to 10. In the backrest 9 for the corner part, the base member 10 is formed in a curved shape along the corner 7, when seen in the extending direction of the reference line 13. More specifically, the base member 10 includes a first base member 23 provided on a first wall surface 26 which is the sleeve partition 6, for example, and a second base member 24 that extends in a direction intersecting the first base member 23. The second base member 24 is formed along the side inner wall surface W1 that extends to intersect the sleeve partition 6.

Hereinafter, an example in which the first base member 23 also serves as the sleeve partition 6, and thus, the first base member 23 and the sleeve partition 6 are integrally formed to form the new sleeve partition 6A will be described. However, the form of the first base member 23 is not limited thereto, and the first base member 23 and the sleeve partition 6 may be formed as separate bodies. In other words, a configuration in which the first base member 23 is attached to an existing sleeve partition 6B may be adopted.

The first base member 23 according to this embodiment is formed in an approximately D shape in an external view, as shown in FIG. 9, to serve as a partition between the long seat 4 and the entrance E. Specifically, the first base member 23 and the second base member 24 are disposed so that long sides thereof overlap each other in the corner 7 which is formed by the first wall surface 26 and the second wall surface 27. Using these long sides as chords, curve portions 25 that extend in an approximately arc shape are respectively formed.

It is preferable that the first base member 23 and the second base member 24 are integrally formed of a resin material or the like. According to such a configuration, it is possible to simplify a manufacturing process.

Further, an area formed between the respective curve portions 25 in the first base member 23 and the second base member 24 is bent from an upper side to a lower side along the direction of the reference line 13, to thereby form a support surface 25A. That is, the base member 10 is formed by changing a curvature of an arc corresponding to the curve portion 25 that uses the above-mentioned long sides as the chords between the first wall surface 26 and the second wall surface 27 so that the entirety thereof is smoothly recessed along the corner 7 when seen in the extending direction of the reference line 13, and a front surface thereof becomes the support surface 25A. An outer surface of the support surface 25A is formed as the front surface 14A of the base member 10. Further, in a cross-sectional view (not shown) including the retaining member 11 of the base member 10, the base member may have a hollow shape or a solid shape.

The retaining member 11 is provided on the front surface 14A of the base member 10. Similar to the backrest 8 for the flat part, the thickness of the retaining member 11 is approximately uniform along the front surface 14A of the base member 10. Further, the retaining member 11 is formed of a material capable of being elastically deformed to serve as a cushion that eases a hard feeling when a passenger leans thereon. As such a material, for example, urethane foam or a foamable resin material such as sponge may be considered.

The front surface 14B of the retaining member 11 has a curved shape along the front surface 14A of the base member 10. Specifically, the front surface 14B of the retaining member 11 is formed in a concave shape in which the entirety thereof is smoothly recessed toward the main surface when seen in the extending direction of the reference line 13, and is formed in a shape that protrudes while being bent toward a direction away from the main surface 12 when seen in the direction intersecting the reference line 13. More specifically, when seen in the extending direction of the reference line 13, the retaining member 11 includes a first curved surface 21 provided along the front surface 14A on the side of the first base member 23, and a second curved surface 22 provided along the front surface 14A on the side of the second base member 24. Both of the first curved surface 21 and the second curved surface 22 are curved surfaces formed to be bent toward the attachment portion 38 (main surface 12) in the extending direction of the reference line 13. The first curved surface 21 and the second curved surface 22 are continuously formed to form a single curved surface. Thus, the front surface 14 of the retaining member 11 exhibits a concave shape in which the entirety thereof is smooth toward the main surface 12.

A sectional view of the backrest 9 for the corner part including the retaining member seen in the direction intersecting the reference line 13 is approximately the same as the sectional view of the backrest 8 for the flat part shown in FIG. 5A, but the invention is not limited thereto. For example, the thickness of the retaining member 11 may be formed to be greater than the thickness of the base member 10, such as the backrest 8 for the flat part shown in FIG. 6A, and the front surface 14B of the retaining member 11 may be formed to have a curved shape such as a convex shape from the front surface 14A of the base member 10.

When seen in the extending direction of the reference line 13, an extending dimension of the second base member 24 is set to be shorter than an extending dimension of the first base member 23. Thus, even in a place where a space is limited, the second base member 24 may be disposed with no problem.

The backrest 9 for the corner part formed as described above is disposed at a position of such a height that an upper edge 8A of the inner wall surface W is approximately disposed at the height of the passenger's shoulders and a lower edge 8B is approximately disposed at the height of the passenger's legs, for example. A passenger leans back while retaining the back on the backrest 9 for the corner part disposed as described above. More specifically, the passenger leans back so that the back approximately directs towards the corner 7. Particularly, since the retaining member 11 is formed of an elastic material, it is possible to provide excellent ride comfort to a passenger, compared with a case where the passenger directly leans on a hard wall surface.

Hereinbefore, the embodiment of the invention has been described in detail with reference to the accompanying drawings, but a specific configuration is not limited to the embodiment, and design modifications or the like may be included in a range without departing from the scope of the invention.

For example, places where the backrests 200 are provided are not limited to the above-described embodiment. As shown in FIG. 2, the backrests 200 may be applied to various places in the vehicle body 101. Specifically, the following places may be considered.

For example, the first wall surface 26 may be the end panel inner wall surface W3 of the vehicle 100, and the second wall surface 27 may be the side inner wall surface W1 of the vehicle 100. Further, the first wall surface 26 may be the front inner wall surface W2, and the second wall surface 27 may be the side inner wall surface W1. Furthermore, the first wall surface 26 may be the wall surface W of the device box provided in the vehicle 100, and the second wall surface 27 may be the side inner wall surface W1. In addition, it may be considered that the backrest 200 is applied to the inner wall surface W in a multipurpose space P such as a wheelchair space provided in the vehicle 100. Further, in FIG. 2, a configuration in which the backrest 9 for the corner part is provided at one end portion of the long seat 4 is shown. However, the backrest 9 for the corner part may be provided at each of both end portions of the long seat 4.

### (Second embodiment)

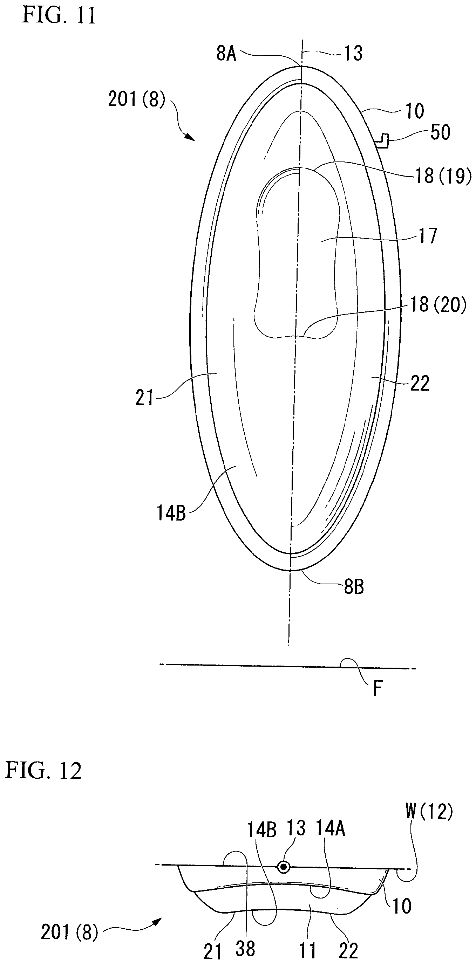

Subsequently, a second embodiment of the invention will be described with reference to FIGS. 11 to 13. A backrest 201 according to this embodiment has a configuration different from the above-described first embodiment in the following points. In the backrest 201 according to this embodiment, unevenness that follows up the shape of the passenger's body is formed on a front surface 14B of a retaining member 11. Specifically, as shown in FIG. 12, the front surface 14B of the retaining member 11 is formed by a first curved surface 21 and a second curved surface 22 that extend in different directions with the above-described reference line 13 being interposed therebetween. The first curved surface 21 and the second curved surface 22 are curved surfaces formed to be bent toward the attachment portion 38 (main surface 12) when seen in the extending direction of the reference line 13. The first curved surface 21 and the second curved surface 22 are continuously formed to form a single curved shape. Thus, the front surface 14B of the retaining member 11 is formed in a concave shape in which the entirety thereof is smoothly recessed toward the main surface 12.

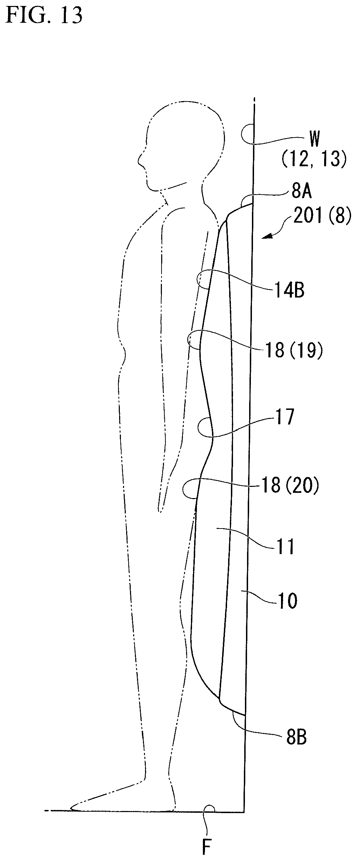

Further, as shown in FIG. 13, a concave portion 17 that is recessed in a direction approaching the main surface 12 from the front surface 14B is formed in the retaining member 11 when seen in the direction intersecting the reference line 13. In addition, at least one convex portion 18 that is provided along the extending direction of the reference line 13 in parallel to the concave portion 17 and protrudes in a direction away from the base member 10 (main surface 12) is formed on the front surface 14B of the retaining member 11. In this embodiment, two convex portions 18 and 18 are provided. Positions and dimensions of the concave portion 17 and the convex portions 18 may be suitably designed to approximately follow up a curve from the waist to the buttocks of the passenger's body. For example, in this embodiment, a first convex portion 19 formed to follow up the waist and a second convex portion 20 formed to follow up the buttocks are formed in the order from an upper side to a lower side of the retaining member 11.

A passenger leans back while holding the passenger's back on the backrest 201 configured as described above. Here, the wrist and the buttocks of the passenger are supported by the first convex portion 19 and the second convex portion 20, and the entirety of a back part is supported by the concave portion 17. That is, the shape of the front surface 14B of the retaining member 11 corresponds to the body's shape, to thereby assign the hold feeling to the passenger. Thus, it is possible to stably support the load of the standing passenger. Particularly, since the retaining member 11 is formed of an elastic material, it is possible to provide excellent ride comfort to a passenger, compared with a case where the passenger directly leans on a hard wall surface.

In addition, as described above, the front surface 14B of the retaining member 11 is formed in a concave shape by the first curved surface 21 and the second curved surface 22 when seen in the extending direction of the reference line 13. Thus, it is possible to stably retain the passenger's body on both sides in the lateral direction. Accordingly, for example, even in a case where shake or vibration of the vehicle 100 occurs, a passenger does not easily break the posture. Further, even though an extra force for maintaining the posture is not given, it is possible to resist such shake or vibration.

The backrest 201 having the above-described configuration may be applied to any one of the backrest 8 for the flat part and the backrest 9 for the corner part.

Here, for example, in the above-described embodiment, a configuration in which the retaining member 11 is formed in advance in a curved shape corresponding to the shape of the body and constantly maintains the curved surface is shown. However, the form of the retaining member 11 is not limited thereto, and may be elastically deformed similar to the first embodiment, and may be formed of a material having a sufficient elastic restoring force.

According to such a configuration, in a state where a passenger does not use the backrest 201, that is, in a state where load is removed from the retaining member 11, the front surface 14B of the retaining member 11 forms a shape (initial shape) along the front surface 14A of the base member 10 by an elastic restoring force thereof. Accordingly, in a situation where the passenger does not use the backrest 201, since the retaining member 11 restores the initial shape by the elastic restoring force, it is possible to enhance aesthetics of the backrest 201. On the other hand, in a state where a passenger uses the backrest 201, that is, in a state where load is applied to the retaining member 11, the retaining member 11 is greatly deformed to wrap the passenger's body, to thereby make it possible to assign a hold feeling to the passenger. Further, according to such a configuration, the retaining member 11 may offer various curved shapes according to physiques of passengers. Particularly, it is possible to form the concave portion 17 or the convex portion 18 at different positions according to heights of adults or children. Thus, it is possible to enhance habitability for many passengers.

Further, a thin film coating material that covers the front surface 14B of the retaining member 11 may be provided. It is preferable that the coating material has a sufficient fractional force with respect to the passenger's skin or clothes, for example. For example, a configuration in which a coating material subjected to satin finishing or groove cutting covers the retaining member 11 may be used. In addition, a configuration in which the same surface processing is directly performed with respect to the front surface 14B of the retaining member 11 to enhance a frictional force may be used.

According to such a configuration, even in a case where vibration or shake occurs in the vehicle 100, the backrest 200 can more stably retain the passenger's body.

In addition, in the form in which the retaining member 11 is formed of an elastic restoring force, a configuration in which a curved shaped core material having the first curved surface 21, the second curved surface 22, and the concave portion 17 and the convex portions 18 as described above is provided in the retaining member 11 may be employed. As the core material, for example, a plate-shaped resin material that has a curved shape and is integrally molded, or the like, may be considered. According to such a configuration, as a passenger leans back, the retaining member 11 is elastically deformed along the curved shape of the core material. Thus, it is possible to enhance aesthetics, and to obtain excellent habitability for passengers.

According to such a configuration, it is possible to effectively and proactively utilize places where it is difficult to dispose the seats S as spaces that accommodate standing passengers.

### (Third embodiment)

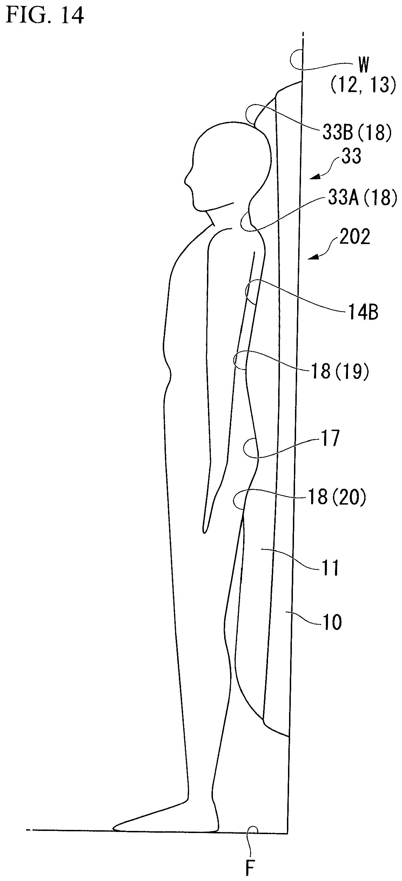

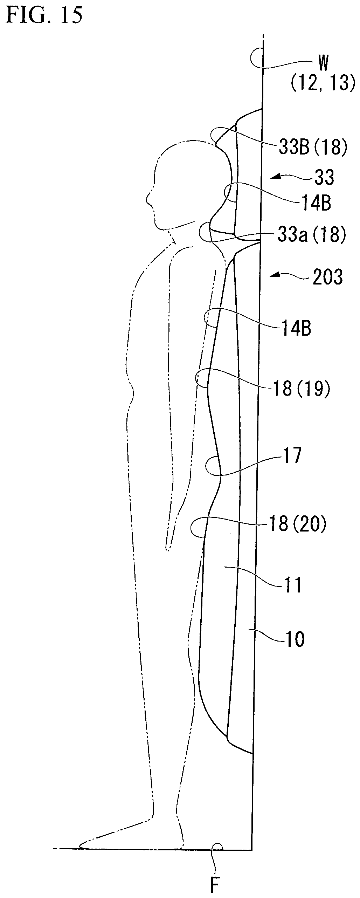

Subsequently, a third embodiment of backrests 202 and 203 according to the invention will be described with reference to FIGS. 14 and 15. The backrests 202 and 203 according to this embodiment are different from the above-described embodiments in the following points. That is, the backrests 202 and 203 according to this embodiment further include a headrest 33 for supporting the passenger's head.

The headrest 33 is formed by providing the above-described two convex portions 18 (the first convex portion 19 and the second convex portion 20), a third convex portion 33A, and a fourth convex portion 33B, on the front surface 14B of the retaining member 11. The third convex portion 33A and the fourth convex portion 33B are disposed at intervals along the extending direction of the reference line 13 on an upper side with reference to the first convex portion 19 and the second convex portion 20. In a case where a passenger uses the headrest 33, as shown in FIG. 14, the third convex portion 33A follows up the passenger's neck, and the fourth convex portion 33B follows up an upper portion of the head of the passenger. Thus, the third convex portion 33A and the fourth convex portion 33B function as the headrest 33 by retaining the passenger's head to wrap the head. The headrest 33 may be disposed on an upper side with a gap from an upper end portion of the backrest 202 (see the backrest 203 in FIG. 15 (which will be described later)), or may be formed integrally with the backrest 202. In FIG. 14, an example in which the headrest 33 and the backrest 202 are integrally formed is shown.

On the other hand, FIG. 15 shows an example in which the headrest 33 and the backrest 203 are individually configured. In this case, the headrest 33 has only different dimensions of respective portions thereof compared with the backrest 203, and is formed using the same configuration and members as in the backrest 203. That is, in the example of FIG. 15, it can be said that the backrest is divided into two parts along the extending direction of the reference line 13.

According to such a configuration, it is possible to stably support the passenger's head, and thus, it is possible to withstand use under an environment that higher stability is necessary, such as a train that travels at high speed, for example.

### (Fourth embodiment)

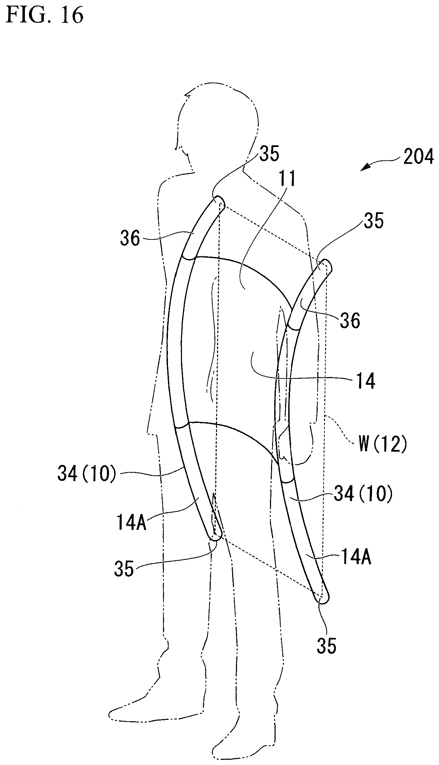

Subsequently, a fourth embodiment of a backrest 204 according to the invention will be described with reference to FIG. 16. The backrest 204 according to this embodiment is different from the above-described embodiments in the following points. In the backrest 204 according to this embodiment, a plurality of rod-shaped members 34 formed so that both end portions thereof are fixed to the inner wall surface W and a space between the both end portions is bent is used as base members 10. Further, as the retaining member 11, a fabric material bridged between the rod-shaped base members 10 is used.

The rod-shaped member 34 may be formed by bending a circular tube member or the like made of metal, for example, into an arc shape. In the state of being installed on the inner wall surface W, the plurality of rod-shaped members 34 are approximately parallel to each other. Further, the size of separation between the rod-shaped members 34 is set to be sufficiently larger than the width of the passenger's body. The respective end portions of the rod-shaped members 34 are respectively fixed to four fixation positions 35 on the inner wall surface W using fixing members (not shown). A rectangular area formed by connecting the four fixation positions 35 with straight lines forms the main surface 12 on the inner wall surface W.

As described above, the retaining member 11 is provided on the base members 10 configured by two rod-shaped members 34. Specifically, the retaining member 11 is bridged along curved shapes of front surfaces 14A (outer peripheral surfaces) of the rod-shaped members 34 which are the base members 10. When attaching the retaining member 11 to the base members 10 (the rod-shaped members 34), a method of providing a winding margin to each of both edges 37 in the width direction of the retaining member 11 and wrapping the winding margin along the outer peripheral surface of each rod-shaped member 34 may be considered as an example. The winding margin wrapped around the rod-shaped member 34 may be sewn to the retaining member 11 to be firmly fixed.

When fixing the base members 10 and the retaining member 11, a configuration in which a separate fixing member (not shown) is provided between the two members may be used. Specifically, the fixing member is a member formed to be bent along the front surface 14A (outer peripheral surface) of the base member 10 (rod-shaped member 34). By providing the fixing member, it is possible to stably retain the curved shape of the retaining member 11.

Further, the retaining member 11 is integrally formed of a stretchable fiber-based material. As a form of the stretchable fiber-based material, a fabric obtained by weaving elastic fibers, which has elasticity in an extending direction of the fabric, or a fabric obtained by stereoscopically weaving elastic fibers, which has elasticity in a thickness direction of the fabric in addition to an extending direction thereof may be considered as a specific example. Further, polyester or the like may be used as the fibers.

When using the backrest 204 configured in this way, a passenger leaves himself or herself on the retaining member 11, to thereby make it possible to maintain a stable posture even in a standing state. More specifically, the retaining member 11 formed of an elastic fiber-based material is stretched corresponding to a body's shape to form a curved shape, and thus, it is possible to dispersedly support load of a passenger. Thus, a passenger can be given excellent ride comfort. In addition, with a simple structure, it is possible to simplify a manufacturing process, and to enhance aesthetics inside the vehicle 100.

In the above-described description, an example in which the fiber-based material such as cloth is used as the retaining member 11 is shown. However, the form of the retaining member 11 is not limited thereto, and for example, a resin material such as vinyl formed in a sheet shape, or a natural material such as leather may be used, for example. With such a configuration, the retaining member 11 follows up a curved shape of the body, to make it possible to provide an excellent comfort ride to a passenger.

Further, the curved shape of the base member 10 (rod-shaped member 34) is not limited to the above-mentioned circular arc shape, and the curved shape may be formed so that its bending is gradually enlarged, for example, from the top to the bottom in a state of being attached to the inner wall surface W. According to such a shape, when a passenger leans back, it is possible to more stably retain the body by supporting load from below in an inclined direction.

### (Fifth embodiment)

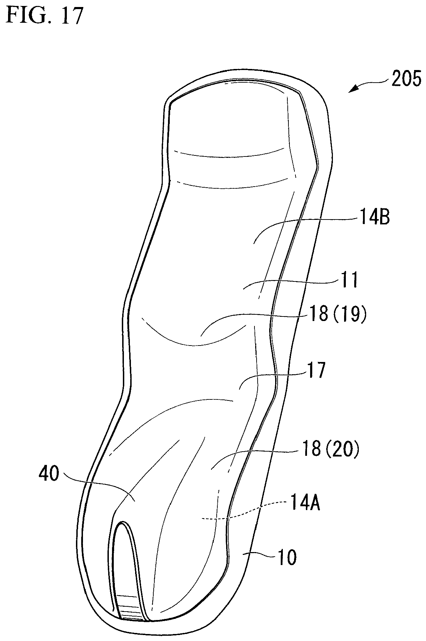

Next, a fifth embodiment of the invention will be described with reference to FIG. 17. As shown in FIG. 17, a partitioning portion 40 is provided as a retaining member 11 in a backrest 205 according to this embodiment. The partitioning portion 40 is disposed in an area under the concave portion 17 on the front surface 14B of the retaining member 11. More specifically, the partitioning portion 40 is provided to smoothly protrude from the front surface 14A of the base member 10. Further, the dimension of the partitioning portion 40 in the extending direction of the reference line 13 is set to be approximately the same as the dimension of the passenger's legs.

According to such a configuration, when a passenger leans on the backrest 205, it is possible to interpose the partitioning portion 40 between both legs. Thus, the backrest 205 can more stably retain the passenger's body in a lateral direction.

### Industrial Applicability

According to the above-described backrests, it is possible to provide a guide track transportation system that enhances habitability and aesthetics inside a vehicle.

### Reference Signs List

- 1: side wall surface
- 2: front wall surface
- 3: rear wall surface
- 4: long seat
- 5: cross seat
- 6: sleeve partition
- 7: corner
- 8: backrest for flat part
- 9: backrest for corner part
- 10: base member
- 11: retaining member
- 12: main surface
- 13: reference line
- 14: front surface
- 17: concave portion
- 18: convex portion
- 19: first convex portion
- 20: second convex portion
- 21: first curved surface
- 22: second curved surface
- 23: first base member
- 24: second base member
- 25: curve portion
- 25A: support surface
- 26: first wall surface
- 27: second wall surface
- 33: headrest
- 33A: third convex portion
- 33B: fourth convex portion
- 34: rod-shaped member
- 35: fixation position
- 36: outline
- 37: both edges
- 38: attachment portion
- 40: partitioning portion
- 50: hook
- 70: guide track
- 80: guide rail
- 81: power supply cable
- 90: track road surface
- 91: side wall
- 100: vehicle
- 101: vehicle body
- 102: wheel
- 103: guide wheel
- 104: power collector
- 200,201,202,203,204,205: backrest
- E: entrance
- F: floor surface
- M: device box
- P: multipurpose space
- S: seat
- T: guide track transportation system
- W: inner wall surface
- W1: side inner wall surface
- W2: front inner wall surface
- W3: end panel inner wall surface
- X: internal space

## Claims

1. A backrest for supporting load of a standing passenger, the backrest comprising:
a base member that is provided along a main surface including a reference line that extends in a direction that intersects a floor surface of a vehicle; and
a retaining member that is provided on a front surface of the base member and has a front surface of a curved shape in a state of supporting the load in a direction toward the front surface.

2. The backrest according to claim 1,
wherein the front surface of the retaining member is formed in a concave shape having a first curved surface and a second curved surface that extend in different directions with the reference line being interposed therebetween, when seen in an extending direction of the reference line.

3. The backrest according to claim 1 or 2,
wherein the front surface of the retaining member is formed in a convex shape that protrudes in a direction away from the main surface, when seen in a direction that intersects the reference line.

4. The backrest according to any one of claims 1 to 3,
wherein the retaining member includes a concave portion that is recessed in a direction approaching the front surface of the base member, when seen in the direction that intersects the reference line.

5. The backrest according to claim 4,
wherein the retaining member includes at least one convex portion that protrudes in the direction away from the front surface of the base member, when seen in the direction that intersects the reference line, and is disposed along the extending direction of the reference line in parallel to the concave portion.

6. The backrest according to claim 4 or 5,
wherein the retaining member further includes a partitioning portion that extends along the reference line in an area which is close to the floor surface with reference to the concave portion and protrudes in the direction away from the front surface of the base member.

7. The backrest according to any one of claims 1 to 6,
wherein the retaining member is formed of a material that enables the front surface thereof to maintain the curved shape in a state where the load is removed.

8. The backrest according to any one of claims 1 to 6,
wherein the retaining member is formed of a material having an elastic restoring force and restores an initial shape different from the curved shape in a state where the load is removed.

9. The backrest according to any one of claims 1 to 8,
wherein the retaining member is formed of a stretchable fiber-based material.

10. A vehicle comprising the backrest according to any one of claims 1 to 9,
wherein the base member is integrally or separately provided on a wall surface in the vehicle that extends along the main surface.

11. The vehicle according to claim 10,
wherein the wall surface includes a first wall surface and a second wall surface that form a corner by intersecting each other.

12. The vehicle according to claim 11,
wherein the first wall surface is a sleeve partition of the vehicle, and the second wall surface is a side inner wall surface of the vehicle.

13. The vehicle according to claim 11,
wherein the first wall surface is an end panel inner wall surface of the vehicle, and the second wall surface is a side inner wall surface of the vehicle.

14. The vehicle according to claim 11,
wherein the first wall surface is a partition wall surface with respect to a driver's cab of the vehicle, and the second wall surface is a side inner wall surface of the vehicle.

15. The vehicle according to claim 11,
wherein the first wall surface is a wall surface of a device box provided in the vehicle, and the second wall surface is a side inner wall surface of the vehicle.

16. The vehicle according to claim 10,
wherein the wall surface is an inner wall surface in a multipurpose space provided in the vehicle.

17. A guide track transportation system comprising:
the vehicle according to any one of claims 10 to 16; and
a guide track on which the vehicle travels.
